# EUROPÄISCHE PATENTSCHRIFT

(11) **EP 1 892 204 B1**
(45) Veröffentlichungstag und Bekanntmachung des Hinweises auf die Patenterteilung: **09.03.2011**
(21) Anmeldenummer: 07014388.8
(22) Anmeldetag: 23.07.2007
(51) Int. Cl.: B65G 47/84, B65G 15/58, B65G 21/20, B65G 59/04, B65G 57/04

(54) **Vakuumförderer zum Transport, Ablegen und Stapeln von flächenförmigen Gegenständen**
Vacuum conveyor for transport, depositing and stacking of flat objects
Convoyeur à vide destiné à transporter, poser et empiler des objets de forme étendue

(30) Priorität: 25.08.2006 DE 102006040027
(43) Veröffentlichungstag der Anmeldung: 27.02.2008
(73) Patentinhaber: Beer, Christian, 6858 Schwarzach (AT)
(72) Erfinder: Beer, Christian, 6858 Schwarzach (AT)
(74) Vertreter: Riebling, Peter

(56) Entgegenhaltungen:
- DE-A1- 2 720 030
- US-A- 3 302 803

## Beschreibung

Die Erfindung betrifft einen Vakuumförderer nach dem Oberbegriff des Patentanspruchs 1.

Ein diesbezüglicher Stand der Technik ist beispielsweise aus der DE 27 20 030 B2 zu entnehmen. Bei dem dortigen Vakuumförderer besteht das Prinzip darin, dass an einem umlaufenden Förderband, z. B. einem Zahnriemen, in Förderrichtung hintereinanderliegend und im gegenseitigem Abstand eine Vielzahl von Saugblöcken angeordnet ist, wobei jeder Saugblock im Wesentlichen aus einem Gehäuse besteht, welches an dem Fördergurt befestigt ist und einem mit dem Gehäuse verbundenen Saugnapf, der sich an dem Fördergut saugend anlegt und dieses aufnimmt und transportiert.

Bei der genannten DE 27 20 030 B2 wird kein eigenes Vakuum an der Saugglocke erzeugt. Vielmehr beschränkt sich das für die Aufnahme des Fördergutes notwendige Vakuum auf die elastomere Rückstellkraft der Saugglocke, die beim Aufdrücken auf den zu fördernden Gegenstand sich verformt und hierdurch in an sich bekannter Weise ein Vakuum erzeugt.

Aus dieser Druckschrift ist ferner zu entnehmen, dass die Entlüftung des Vakuums, wenn es nicht mehr gebraucht wird, durch Kippen des Gehäuses des Saugblockes erfolgt, wobei dieses Verkippen gegenüber einer Feder geschieht.

Beim Verkippen des Gehäuses ist somit eine Belüftungsbohrung frei, die von Außen her Luft ansaugt und so das Vakuum aufhebt.

Eine Kulissensteuerung, das heißt eine Hubsteuerung des Gehäuses oder der Saugglocke ist aus dieser Druckschrift nicht zu entnehmen.

Mit der DE 1 231 624 B2 ist ein weiterer Saugförderer bekannt geworden, bei dem die Saugblöcke aus einzelnen Saugkammern bestehen, denen das Vakuum über einen gelochten Fördergurt zugeführt wird. Die Vakuumerzeugung ist deshalb außerordentlich ungünstig, aufwendig und unzuverlässig.

Ansonsten offenbart diese Druckschrift ebenfalls durch Federlast an das Transportgut andrückbare, elastomer verformbare Saugglocken, die auch in der bereits erwähnten DE 27 20 030 B2 bekannt sind.

Mit dem Gegenstand der DE 1 205 451 B2 ist ein weiterer Saugförderer bekannt geworden, bei dem das Vakuum an die Saugglocken über jeweils einen unterdruckführenden Schlauch zugeführt wird.

Es versteht sich, dass eine derartige Unterdruckführung bei einem umlaufenden Bandförderer außerordentlich schwierig und anfällig ist.

Die zuvor erwähnte DE 27 20 030 B2 bzw. A1, als auch die US 3628654 A, DE 1058938 B und die EP0613844 A2 offenbaren alle Merkmale des Oberbegriffes des unabhängigen Patentanspruches 1.

Der Erfindung liegt deshalb die Aufgabe zugrunde, ausgehend von der DE 27 20 030 B2, einen Saugförderer der genannten Art so weiterzubilden, dass das Vakuum in der jeweiligen Saugglocke über eine längere Zeit aufrechterhalten wird und nicht nur allein von den elastomeren Eigenschaften der Saugglocke abhängt.

Zur Lösung der gestellten Aufgabe ist die Erfindung durch die Merkmale des unabhängigen Patentanspruches 1 gekennzeichnet, wobei vorteilhafte Weiterbildungen in den abhängigen Patentansprüchen beschrieben sind.

Grundlegendes Merkmal ist, dass am Gehäuse des Saugblockes eine hubgesteuerte Unterdruckpumpe vorhanden ist.

Mit der gegebenen technischen Lehre ergibt sich der wesentliche Vorteil, dass durch die jeweilige separate Anordnung einer hubgesteuerten Unterdruckeinrichtung am Saugblock nun die Möglichkeit besteht, im Saugblock individuellen Unterdruck zu erzeugen, wobei dieser Unterdruck auch über eine längere Strecke aufrechterhalten bleibt, weil jeweils mit der Betätigung der Unterdruckpumpe der Unterdruck in beliebiger Weise und beliebig lange erzeugt werden kann.

Damit ist es nun erstmals möglich, dass man nicht allein auf die elastomeren Eigenschaften der Saugglocke angewiesen ist, welche den Unterdruck erzeugt, sondern man kann willkürlich entsprechend den Erfordernissen Unterdruck im jeweiligen Saugblock erzeugen.

Zwar ist aus der DE 1 058 938 B2 bereits schon eine Hubsteuerung an einem Saugblock zu entnehmen; diese Hubsteuerung dient jedoch nur zur Steuerung des Entlüftungsventils und nicht zur Erzeugung eines Unterdrucks.

Bei der technischen Lehre der Erfindung ergibt sich der Vorteil, dass auch bei leichten Beschädigungen der Saugglocke immer durch Betätigung der Unterdruckpumpe ein Vakuum nachgeliefert werden kann, so dass die insgesamte Lebensdauer eines solchen Bandförderers mit daran angebrachten Saugblöcken wesentlich größer ist.

Weiterer Vorteil ist, dass ein unerwünschtes Entweichen von Unterdruck an der Oberfläche des Transportgutes nun durch die Erzeugung eines Vakuums im Bereich des Saugblockes ausgeglichen wird, wodurch die Anlage betriebssicherer arbeitet. Insbesondere wenn das Vakuum über die raue Oberfläche des Transportgutes entweicht, ist es normalerweise nicht mehr möglich, das Transportgut sicher zu fördern.

Hier setzt die Erfindung ein, die die Erzeugung eines Unterdruckes vorsieht und deshalb auch bei rauen Oberflächen noch eine zuverlässige Förderleistung ergibt.

In der eigenen, älteren Patentanmeldung DE 10 2005 007 472 war ein Vakuumförderer beschrieben worden, bei dem das Vakuum in dem jeweiligen Saugblock durch Zuführung von Überdruck in den Saugblock geschieht und im Saugblock eine Venturidüse angeordnet ist, welche den erforderlichen Unterdruck an der Saugglocke erzeugt. Nachteil dieser Anordnung war jedoch der relativ große Luftverbrauch zur Erzeugung von Unterdruck.

Hier setzt die Erfindung ein, die mechanisch betätigte Unterdruckpumpen in jedem Saugblock vorsieht.

Statt der Anordnung von mechanisch betätigten Unterdruckpumpen können jedoch auch alle anderen Unterdruckpumpe verwendet werden, wie z. B. auch elektromagnetisch betätigte Unterdruckpumpen, permanentmagnetisch betätigte Unterdruckpumpen, rotierende Unterdruckpumpen, Membranpumpen und Stößelpumpen.

Es kommen also sämtliche Unterdruck erzeugenden Unterdruckpumpen in Betracht, die erfindungsgemäß in jeweils einem Saugblock angeordnet sind.

Selbstverständlich fallen unter den Erfindungsgedanken auch die Drehkolbenpumpen, Drehschieberpumpen, Schlauchpumpen und dergleichen mehr.

Die Erfindung ist also nicht auf eine bestimmte Art einer Unterdruckpumpe beschränkt, sondern beansprucht allgemeinen Schutz dafür, dass in dem jeweiligen Saugblock ein Unterdruck erzeugendes Aggregat angeordnet ist, welches von außen her betätigt wird.

Erfindungsgemäß ist die Unterdruckpumpe als mechanische Stößelpumpe ausgebildet , wobei der Stößel entweder gegen eine an einer Führungsschiene des Bandförderers angeordneten Kulissen abrollt oder federbelastet gegen einen Antriebsriemen arbeitet, und die erforderliche Hubbewegung durchführt.

Vorteil der Anordnung einer Kulisse ist, dass man eine beliebige Anzahl von Hubbewegungen pro Förderstrecke zuordnen kann, je nachdem welche Amplituden man der Kulisse zuordnet.

In einer bevorzugten Ausgestaltung der Erfindung kann es beispielsweise vorgesehen sein, ein derartiges Pumpenstößel pro Meter Förderlänge zehn mal zu betätigen. Hierauf ist die Erfindung jedoch nicht beschränkt. Es können mehr oder weniger Betätigungshübe vorgesehen werden.

Ein Vorteil der erfindungsgemäßen Lösung, nämlich der Anordnung eines hubgesteuerten Unterdruckaggregates im Saugblock ist der, dass auch eine automatische Einstellung eines maximalen Unterdruckes gegeben ist.

Aufgrund der Federbelastung des Pumpenstößels, dessen eine Seite luftschlüssig über ein Rückschlagventil mit dem Innenraum der Saugglocke verbunden, wird der Pumpenstößel nicht mehr in Saugrichtung bewegt, wenn ein genügendes Vakuum in der Saugglocke angelegt ist. In diesem Fall reicht die Federkraft der Feder nicht mehr aus, den Betätigungsstößel gegen die Kulisse in der Führungsschiene zu pressen, so dass dieser in einer bestimmten neutralen Stellung verharrt und erst wieder von der Feder in die Pumpposition gebracht wird (Anlage an die Kulisse), wenn das Vakuum in der Saugglocke schwindet.

Auf diese Weise wird eine selbsttätige Aufrechterhaltung von Vakuum in der Saugglocke gewährleistet, ohne dass es auf die Hubbetätigung des Betätigungsstößels ankommt. Dieser wird nur betätigt, wenn Vakuum nachgefüllt werden muss.

Neben einer linearen Kolbenpumpe, die nachfolgend in den Ausführungsbeispielen beschrieben wird, ist es selbstverständlich auch möglich, eine doppelwirkende Kolbenpumpe oder eine Zwei-Kolbenpumpe zu verwenden.

Ebenso wird in den nachfolgenden Ausführungsbeispielen eine Membranpumpe beschrieben, für die ebenfalls gesonderter Schutz beansprucht wird.

In einer Weiterbildung der vorliegenden Erfindung ist es vorgesehen, dass der Antrieb für den Hubantrieb der Unterdruckpumpe unabhängig von dem Antrieb des Bandförderers ist. Hierbei wird es bevorzugt, wenn den Unterdruckpumpen, die in den einzelnen Saugblöcken angeordnet sind, ein einziger, gemeinsamer Antrieb zugeordnet ist, der unabhängig von dem Antrieb des Bandförderers ist. Damit ergibt sich der wesentliche Vorteil, dass nun unabhängig von dem Lauf des Bandförderers - unabhängig von der Tatsache, dass der Fördergurt des Bandförderers bewegt ist oder nicht - immer Unterdruck erzeugt werden kann. Selbst wenn der Bandförderer steht, kann somit bei getrennt angetriebenen Unterdruckpumpen ein gewünschter Unterdruck erzeugt werden, was ein wesentlicher Vorteil gegenüber dem Stand der Technik ist.

In einer bevorzugten Ausgestaltung dieser Ausbildung ist es bevorzugt, wenn der Antrieb für den Hubantrieb der Unterdruckpumpen aus einem Antriebsriemen besteht, der von einem getrennten Antrieb beaufschlagt ist, der unabhängig von dem Antrieb des Fördergurtes arbeitet.

Selbstverständlich kann es in einer einfachen Ausführung der vorliegenden Erfindung vorgesehen sein, dass der Antriebsriemen für die Unterdruckpumpen synchron zu dem Antrieb des Fördergurtes und auch in Abhängigkeit von der Bewegung des Fördergurtes ist. Diese Einfachausführungsform wird jedoch nur untergeordnet beansprucht.

Viel wichtiger ist, dass der Antriebsriemen für die Pumpenstößel der Unterdruckpumpen in den einzelnen Saugblöcken unabhängig von dem Antrieb des Fördergurtes arbeitet, und hierbei wird es weiterhin bevorzugt, wenn der Antrieb des Antriebsriemens gegenläufig zu der Bewegung des Fördergurtes ist. Auf diese Weise wird erreicht, dass die auf dem Fördergurt befestigten Saugblöcke in der einen Richtung bewegt, während in der Gegenrichtung der Antriebsriemen (und somit mit doppelter Geschwindigkeit) an den Pumpenstößeln, auch Blöcke, vorbeiläuft, wodurch eine besonders hohe Antriebsleistung erzielt wird.

Vorteil des gegenläufigen Antriebes des Antriebsriemens für die Pumpenstößel im Vergleich zu dem Antrieb des Fördergurtes ist also ein geringer Energieaufwand, weil durch die gegenläufige Bewegung praktisch eine Verdoppelung der Hubbewegungen der Pumpenstößel der Unterdruckpumpen erzeugt wird, im Vergleich zu einer Antriebsart, wo der Antriebsriemen für die Pumpenstößel gleichläufig mit dem des Fördergurtes ist.

In einer ersten bevorzugten Ausgestaltung ist es vorgesehen, dass dieser Antriebsriemen für den Antrieb der Pumpenstößel der Unterdruckpumpen an seiner Außenseite wellenförmige Kulissen aufweist und die Pumpenstößel mit entsprechenden Rollen auf den durch die wellenförmigen Vorsprünge ausgebildeten Kulissen auf und ab wandern (Berg- und Talfahrt) und so ein besonders einfacher Hubantrieb der Pumpenstößel gegeben ist.

In einer anderen Ausgestaltung dieser Erfindungsidee ist es vorgesehen, dass statt eines Antriebsriemens mit außen liegenden Kulissen ein einfacher Zahnriemen mit einer außen liegenden Verzahnung gewählt wird, so dass auf dieser außen liegenden Verzahnung formschlüssig Ritzel eingreifen, die drehfest mit einer Antriebswelle verbunden sind, wobei die Ritzel und die Antriebswelle jeweils in einem Saugblock angeordnet sind. Die Antriebswelle ist wiederum drehfest mit einer Exzenternocke verbunden, und der Pumpenstößel der Unterdruckpumpe sitzt nun federbelastet auf der Exzenternocke auf, die nun zwangsläufig durch Eingreifen auf der Verzahnung des Antriebsriemens gedreht wird.

Auf diese Weise ist ein einfacher Drehantrieb für die Exzenternocke und somit ein einfacher Verschiebungsantrieb für die Pumpenstößel der in den einzelnen Saugglocken angeordneten Unterdruckpumpen gewährleistet.

Wenn auch die vorher beschriebenen Ausführungsbeispiele sich auf federbelastet angetriebene Pumpenstößel von Hubpumpen beziehen, ist dies nicht einschränkend für die vorliegende Erfindung zu verstehen. Die vorliegende Erfindung erfasst sämtliche Pumpenarten, wie sie vorstehend erwähnt wurden und wichtig ist bei der letzt genannten Erfindungsgruppe, dass ein selbsttätiger und unabhängiger Antrieb der Unterdruckpumpen unabhängig von dem Antrieb des Fördergurtes des Bandförderers vorliegt.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematisiert gezeichnete Darstellung eines Bandförderers mit einigen Saugblöcken;
- Figur 2:: Unteransicht der Anordnung in Richtung des Pfeils A in Figur 1;
- Figur 3:: vergrößerte Darstellung nach dem Detail B in Figur 2;
- Figur 4:: Schnitt gemäß der Linie C-C in Figur 3;
- Figur 5:: Schnitt durch eine gegenüber Figur 4 abgewandelte Ausführungsform mit Verwendung einer Membranpumpe;
- Figur 6:: die Hintereinanderanordnung von mehreren Saugblöcken mit eingebauten Membranpumpen.
- Figur 7:: ein abgewandeltes Ausführungsbeispiel, bei dem ein eigener Antriebsriemen für den Antrieb der Pumpenstößel in den Saugblöcken vorhanden ist - im Längsschnitt -
- Figur 8:: Schnitt gemäß der Linie VIII-VIII in Figur 7
- Figur 9:: Schnitt gemäß der Linie IX-IX in Figur 7
- Figur 10:: schematisiert ein Ausführungsbeispiel für einen unabhängigen Antrieb der Unterdruckpumpen mit einem Zahnriemen in einem Vakuumförderen, der kein Teil der Erfindung ist
- Figur 11:: Schnitt gemäß der Linie Xl-Xl in Figur 10

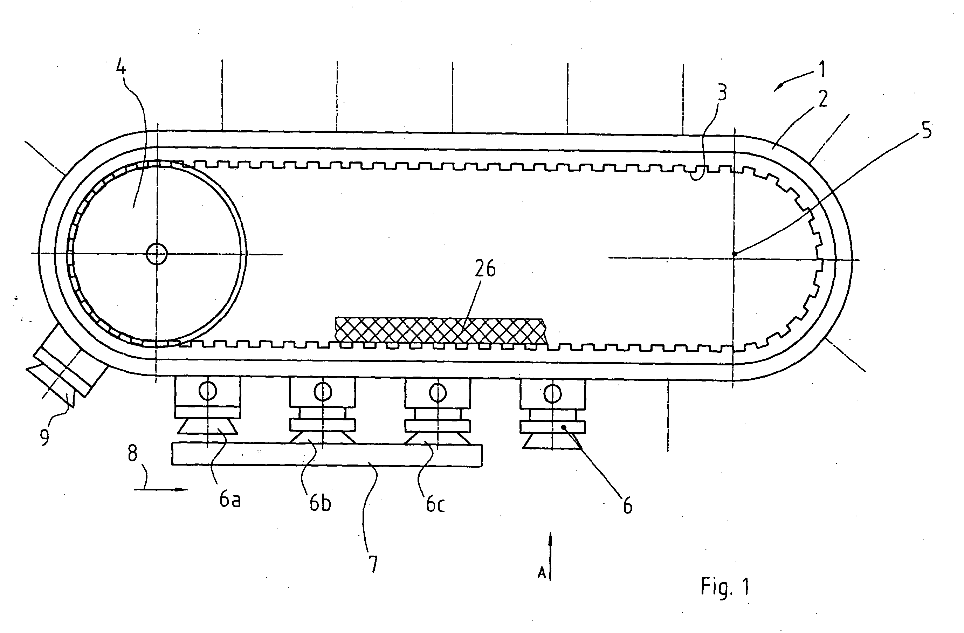

In Figur 1 ist allgemein ein Bandförderer 1 dargestellt, der in dem gezeigten Ausführungsbeispiel aus einem Fördergurt 2 besteht, der bevorzugt aus einem Zahnriemen besteht, der eine innenliegende Verzahnung 3 aufweist.

Selbstverständlich ist die Erfindung nicht auf die Ausbildung des Fördergurtes 2 als Zahnriemen beschränkt. Es können sämtliche Fördergurte verwendet werden, wie z. B. glatte Fördergurte aus einem elastomeren Material, Gliederketten, einzelne Kettenförderer mit parallel zueinander angeordneten Ketten, Keilriemenförderer und dergleichen. Es können also sämtliche Längsförderer verwendet werden.

Im gezeigten Ausführungsbeispiel läuft die Verzahnung 3 des Fördergurtes 2 über jeweils eine Umlenkrolle 4, 5, von denen mindestens eine angetrieben ist.

Auf der Oberfläche des Fördergurtes 2 sind nun eine Vielzahl von Saugblöcken 6 angeordnet, wobei in der Zeichnung nach Figur 1 lediglich diese Saugblöcke 6, 6a, 6b, 6c dargestellt sind, während an den angedeuteten Linien noch weitere Saugblöcke 6 vorgesehen sind, die der zeichnerischen Vereinfachung wegen jedoch nicht gezeichnet sind.

Der Fördergurt 2 wird an seiner Innenseite an einer fest angeordneten Gleitleiste 26 entlanggefördert. Die Gleitleiste 26 dient hierbei als Gegenlager für die Hubsteuerung der Saugglocken 9. Jeder Saugblock 6 besteht gemäß der Darstellung in den Figuren 1, 2 und 3 aus einem Gehäuse 30 an dessen vorderen Ende eine Saugglocke 9 angeordnet ist, wobei alle Saugglocken in Pfeilrichtung 8 mit dem Fördergurt 2 umlaufen.

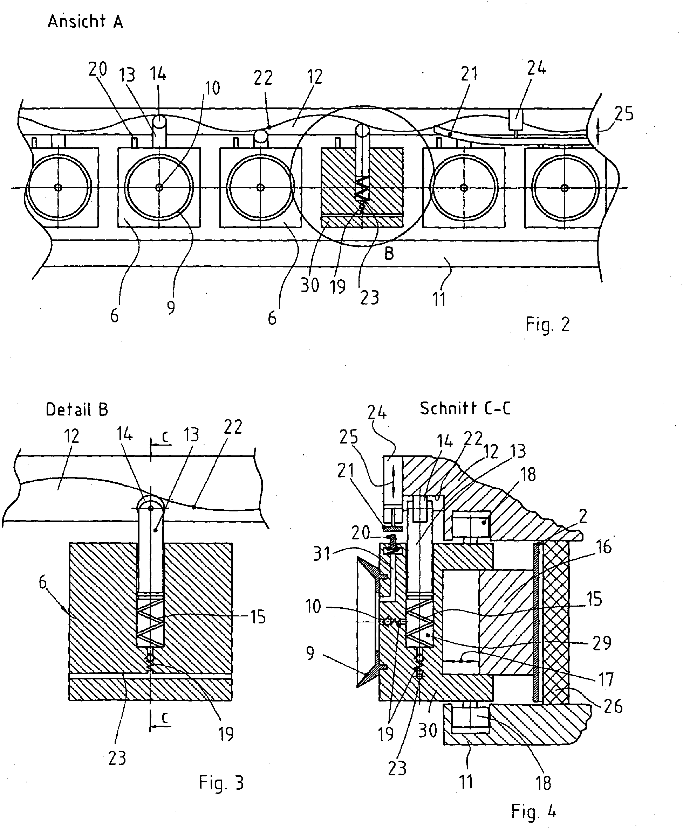

Zur Aufnahme eines Fördergutes 7 wird zunächst die Saugglocke 9 in Pfeilrichtung 17 (siehe Figur 4) nach rechts angehoben, so dass sie die angehobene Stellung wie in Figur 1 bei dem Saugblock 6a einnimmt.

Zur Aufnahme des Transportgutes wird dann die Hubstrecke in Pfeilrichtung 17 überwunden und die Saugglocke 9 fährt aus, so dass sie auf der Oberfläche des Transportgutes 7 aufsetzt und gleichzeitig hierbei Vakuum über die Saugglocke 9 angelegt wird.

An dem Saugblock 6c liegt nun das volle Vakuum in Richtung auf das Fördergut 7 an, das somit in Pfeilrichtung 8 mitgenommen wird.

Die Saugglocke 9 besteht bevorzugt aus einem elastomeren Material, z. B. Gummi, Kautschuk oder Kunststoff und die Saugöffnung weist etwa in der Mitte eine Ansaugbohrung 10 auf, hinter der ein Rückschlagventil 19 angeordnet ist. Das Rückschlagventil 19 ist luftschlüssig mit der Pumpenkammer 29 verbunden. In die Pumpenkammer 29 ragt hierbei das untere Ende eines Pumpenstößels 13 hinein, in dem sich das eine Ende einer Feder 15 anstützt, deren anderes Ende sich am Grund der Pumpenkammer 29 abstützt.

Die Pumpenkammer 29 ist nach außen über ein weiteres Rückschlagventil 19 über eine Entlüftung 23 mit der Atmosphäre verbunden.

Die aus dem Saugblock 6 herausragende Seite des Pumpenstößels 13 ist mit einer Rolle 14 versehen, wobei die Rolle 14 aufgrund der Federlast der Feder 15 an die Oberfläche einer Kulisse 22 angedrückt wird, die Teil einer Führungsschiene 12 ist, die seitlich an dem Bandförderer 1 entlang läuft.

Das Gehäuse 30 des Saugblockes 6 wird hierbei in einander entgegengesetzten U-förmigen Aufnahmen längs geführt, wobei in diesen U-förmigen Aufnahmen Führungsrollen 18 eingreifen.

Zur Hubsteuerung des Saugblockes 6 mit der Längsrichtung ist der Saugblockfuß 16 fest an der Unterseite des Fördergurtes 2 angebracht. Es besteht hierbei das vorher erwähnte Hubspiel in Pfeilrichtungen 17.

Durch Veränderung der U-förmigen Aufnahme (Veränderung des Abstandes der U-förmigen Aufnahme in Richtung zum Fördergurt 2 wird somit der Hub des Saugblockes 6 in den Pfeilrichtungen 17 eingestellt und im Sinne der Figur 1 verändert.

Zur Herstellung eines Vakuums reicht es aus, die Saugglocke 9 mit ihren außenliegenden Saugrändern luftschlüssig auf die Oberfläche des Fördergutes 7 anzulegen, um so eine Abdichtwirkung zu erzielen.

Dies ist ein wesentlicher Vorteil gegenüber dem Stand der Technik, der einen erheblichen Druck auf den Saugblock und die daran befestigte Saugglocke 9 ausüben musste, um diese Elastomer zu verformen. Dies kann bei der Erfindung vermieden werden, dass auch druckempfindliches Fördergut 7 leicht gefördert werden kann. Beispielsweise können so leicht zerbrechliche Glasplatten gefördert werden, was mit dem Stand der Technik nicht möglich war, weil auf die Glasplatten durch Erzeugung eines Unterdruckes ein erheblicher Druck ausgeübt werden musste, um die Saugglocke 9 zu verformen.

Es ist natürlich bei der Erfindung auch möglich, die Saugglocke 9 noch zusätzlich hubgesteuert unter Überwindung der Hubstrecke nach den Pfeilrichtungen 17 aufzupressen, was jedoch nicht notwendig ist.

Durch die Erzeugung des Unterdruckes wird nun der Pumpenstößel 13 in Richtung seiner Längsachse dadurch bewegt, dass die Rolle 14 an einer entsprechend gekurvten Kulisse 22 im Bereich der Gleitleiste 26 entlang rollt und hierbei pro Meter Förderstrecke z. B. eine Hubzahl von 10 ausübt.

Dadurch wird einerseits Luft über die Ansaugbohrung 10 angesaugt und andererseits die in der Pumpenkammer 29 verdichtete Luft über das auslassseitig angeordnete Rückschlagventil 19 über die Entlüftung 23 abgegeben.

In den Figuren 2 und 4 ist noch eine weitere Führungsschiene 11 dargestellt, welche die Führungsrolle 18 auf der gegenüberliegende Seite zur Führungsschiene 12 aufnimmt. Diese Führungsschienen haben die Aufgabe, als Gegenlager für die Hubstrecke in die Pfeilrichtungen 17 zu wirken und ferner das Gewicht des gesamten Saugblockes 6 mit dem daran angehängten Fördergutes 7 aufzunehmen.

Nachfolgend wird nun die gesteuerte Zuführung von Atmosphärenluft in die Saugglocke 9 geschildert, um das Fördergut 7 wieder an einer bestimmten Position der Förderstrecke abgeben zu können.

Zu diesem Zweck sieht die Erfindung vor, dass im Bereich der Führungsschiene 12 eine Abschaltleiste 21 angeordnet ist, die lediglich stückweise vorhanden ist und die gegebenenfalls auch hubgesteuert durch einen Hubzylinder 24 ist.

Am Ende der Förderstrecke ist somit die Abschaltleiste 21 angeordnet und sofern diese in Funktion treten soll, wird der Hubzylinder 24 angesteuert und die Abschaltleiste 21 wird nach unten in Pfeilrichtung 25 gemäß Figur 2 verfahren, wodurch ein Belüftungsventil 20 zur Anlage an die Abschaltleiste 21 kommt und entgegen der Kraft einer Feder geöffnet wird und hiermit Atmosphärenluft über den Belüftungskanal 31 in die Saugglocke 9 eingeführt.

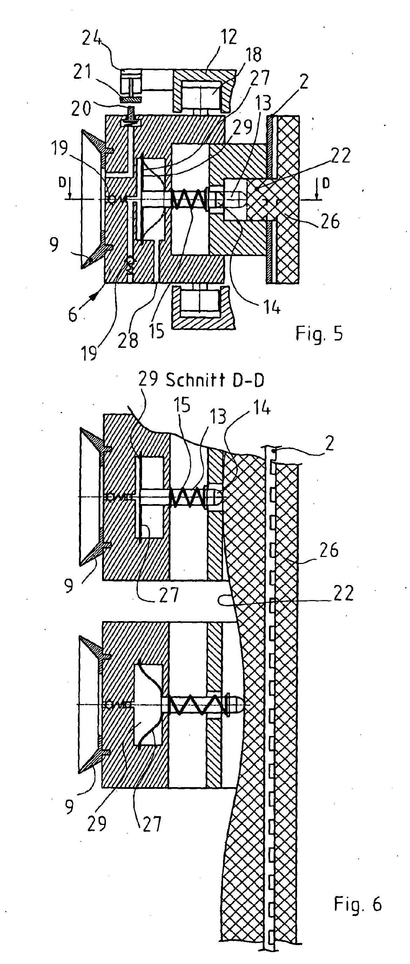

Anhand der Figuren 5 und 6 wird als weitere Ausführungsform für eine mechanisch betätigte Unterdruckpumpe eine Membranpumpe beschrieben, die mit einer heb- und senkbaren Membran arbeitet. Alle gleichwirkenden Teile wurden mit den gleichen Bezugszeichen wie vorstehend bezeichnet, so dass jetzt nur noch auf die Erläuterung der Membranpumpe ankommt.

Im gezeigten Ausführungsbeispiel wirkt der Pumpenstößel 13 entgegen der Kraft der Feder 15 auf eine elastomere verformbare Membran 27, die eine Pumpenkammer 29 ausbildet. Die Membran 27 ist hinterlüftet und die Rückseite ist über eine Entlüftungsleitung 28 mit der Atmosphäre verbunden.

Durch das Zusammenspiel der beiden Rückschlagventile 19 wird somit der Druck in den Innenraum der Saugglocke 9 angelegt und bedarfsweise durch Betätigung des Belüftungsventils 20 wieder entfernt.

Die Figur 6 zeigt, dass sich der Pumpenstößel 13 der Membranpumpe ebenfalls an der Kulisse 22 der Führungsschiene abstützt und den Pumpenstößel 13 hebt und senkt.

Im allgemeinen Beschreibungsteil wurde die automatische Vakuumhaltung in der Saugglocke 9 beschrieben. Unter Bezugnahme auf die Figuren 4 und 5 wird dies noch näher erläutert.

Ist genügend Vakuum in der Saugglocke 9 vorhanden, dann reicht die Federkraft der Feder 15 nicht mehr aus, den Pumpenstößel 13 mit seiner Rolle 14 gegen die Kulisse 22 zu drücken. Vielmehr verharrt der Pumpenstößel 13 in einer in das Gehäuse 30 eingefahrenen Stellung so lange, bis Vakuum aus der Saugglocke 9 entnommen wird oder entweicht, wobei dann die Federkraft der Feder 15 wieder ausreicht, dem Pumpenstößel 13 federbelastet gegen die Kulisse 22 zu pressen, um so durch Gewinnung einer bestimmten Anzahl von Pumpenhüben wieder das Vakuum erneut zu erzeugen.

Die gleichen Verhältnisse gelten für die Membranpumpe nach den Figuren 5 und 6.

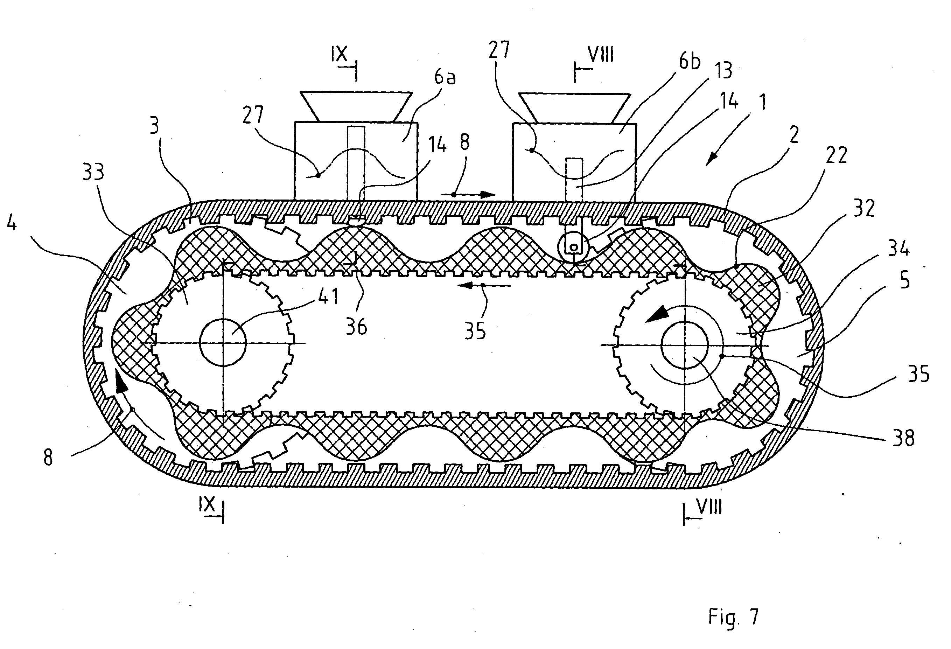

In Figur 7 ist dargestellt, dass ein unabhängig von dem Fördergurt 2 des Bandförderers 1 angetriebener Antriebsriemen 32 vorhanden ist, der über zwei Umlenkrollen 33, 34 läuft, wobei die Umlenkrolle 34 als Antriebsrolle ausgebildet ist. Es erfolgt hierbei ein Drehantrieb in Pfeilrichtung 35, der gegenläufig zu dem Antrieb des Fördergurtes 2 in Pfeilrichtung 8 ist.

Der so gestaltete Antriebsriemen 32 weist an seiner Außenseite eine wellenförmige Kulisse 22 für die Erzeugung des Pumpenhubes des jeweiligen Pumpenstößels 13 auf.

Die vorher erwähnte Rolle 14, die drehbar am freien Ende des federbelastet angeordneten Pumpenstößels 13 angeordnet ist, wälzt sich somit an den Bergen und Tälern der so ausgebildeten Kulisse 22 des Antriebsriemens 32 ab. Damit erfolgt ein Hubantrieb der Pumpenstößel 13 in axialer Richtung, womit die jeweils in dem jeweiligen Saugblock 6a, 6b angeordnete Membran 27 durchgebogen wird und in der vorher beschriebenen Weise einen Unterdruck erzeugt.

Die beiden Rollen 33, 34 sind jeweils auf den Antriebswellen 38, 41 gelagert.

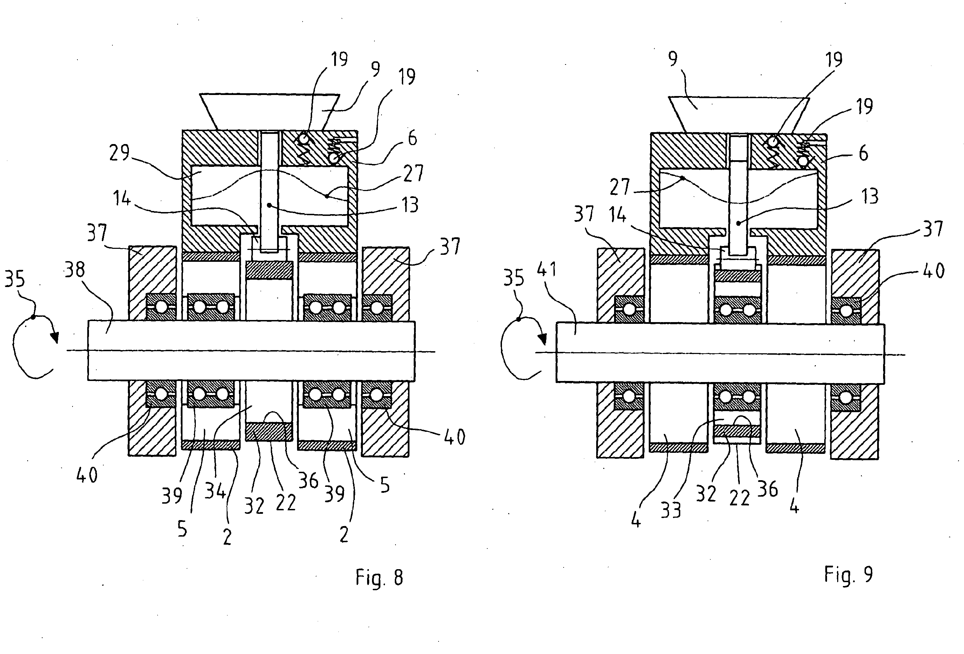

Aus den Figuren 8 und 9 gehen weitere Einzelheiten des Aufbaus nach Figur 7 hervor.

Dort ist erkennbar, dass die jeweilige Antriebswelle 38, 41 in Seitenplatten 37 gelagert ist und ein nicht näher dargestellter Drehantrieb vorhanden ist, der in der Lage ist, in Pfeilrichtung 35 mindestens die eine Antriebsrolle 34 anzutreiben. Der Antriebsriemen 32 weist eine innenliegende Verzahnung 36 auf, die mit einer zugeordneten außen liegenden Verzahnung der Rollen 33, 34 kämmt.

Zusätzlich ist dargestellt, dass auf der gemeinsamen Antriebswelle 38, 41 jeweils Lager 39 angeordnet sind, auf denen die Umlenkrollen 4, 5 des Bandförderers 1 mit dem Fördergurt 2 drehbar gelagert sind.
Die jeweiligen Antriebswellen 38, 41 sind hierbei in Lagern 40 in der jeweiligen Seitenplatte 37 aufgenommen.

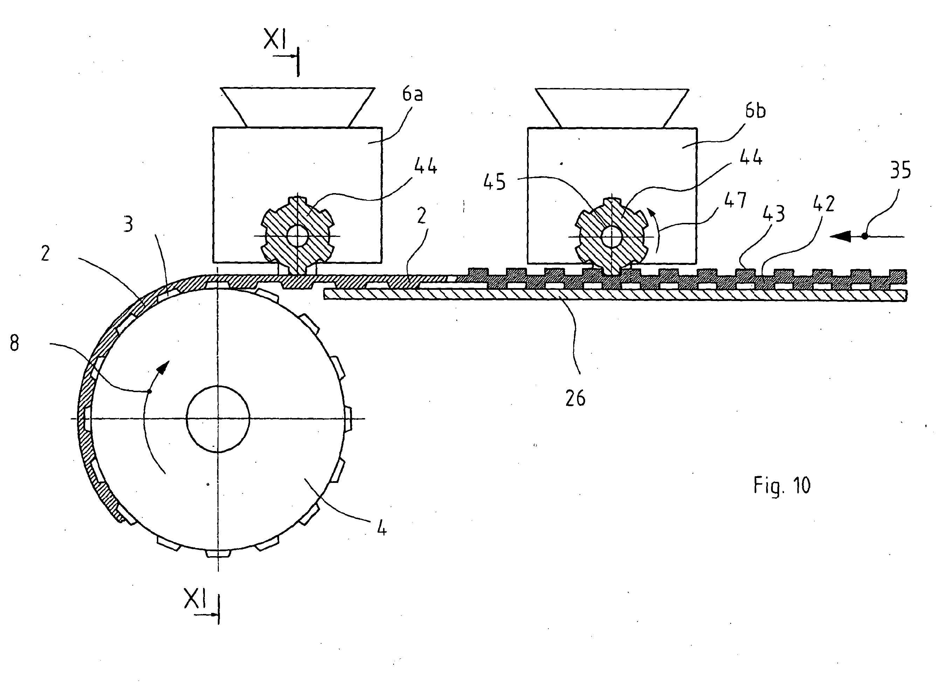

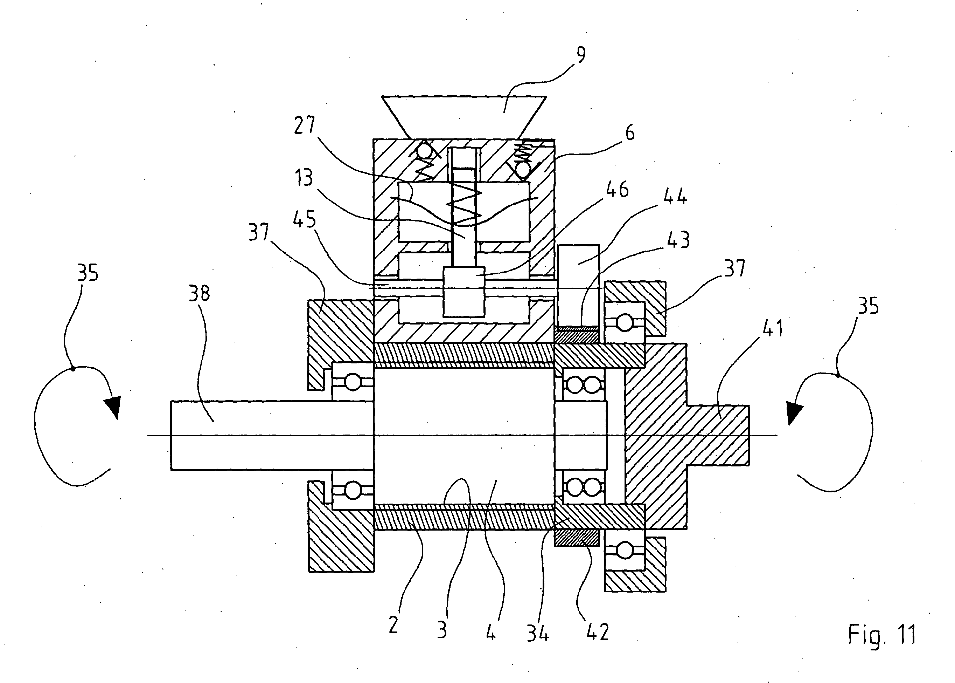

In den Figuren 10 und 11 ist ein Vakuumförderer dargestellt, der kein Teil der Erfindung ist.

In diesem Ausführungsbeispiel ist als weitere Antriebsart für eine Unterdruckpumpe dargestellt, dass wiederum ein unabhängig angetriebener Antriebsriemen 42 vorhanden ist, der mit seiner innenliegenden Verzahnung in der gleichen Weise ausgebildet ist, wie es anhand der Verzahnung 36 in Figur 7 bis 9 dargestellt wurde. Im Übrigen gelten für die gleichen Teile auch die gleichen Bezeichnungen.

Dieser neuartige Antriebsriemen 42 weist darüber hinaus auch noch eine außen liegende Verzahnung 43 auf, die formschlüssig mit dem Außenumfang von zugeordneten Antriebsritzeln 44 kämmt, die Antriebsritzel 44 sind drehbar in dem jeweiligen Saugblock 6, 6a, 6b aufgenommen. Sie werden deshalb jeweils in Pfeilrichtung 47 angetrieben, wenn der Antriebsriemen 42 in Pfeilrichtung 35 angetrieben wird, es werden somit die einzelnen Antriebsritzel 44 in den Pfeilrichtungen 47 drehbar angetrieben. Sie sind gemäß Figur 11 jeweils drehfest mit einer Antriebswelle 45 verbunden, die ihrerseits drehfest mit einer Exzenternocke 46 verbunden ist.

Auf dem Außenumfang der Exzenternocke wälzt sich das Pumpenstößel 13 federbelastet mit einer nicht näher dargestellten Rolle ab und wird deshalb ebenso hubgesteuert und bewegt die Membran 27 auf und ab, um so einen Unterdruck zu erzeugen.

Die gezeigten Ausführungsbeispiele zeigen somit einen unabhängigen Antrieb der Unterdruckpumpen in den einzelnen Saugblöcken, der unabhängig von dem Antrieb des Fördergurtes 2 des Bandförderers 1 arbeitet.

### Zeichnungslegende

- 1: Bandförderer
- 2: Fördergurt
- 3: Verzahnung
- 4: Umlenkrolle
- 5: Umlenkrolle
- 6: Saugblock a, b, c
- 7: Fördergut
- 8: Pfeilrichtung
- 9: Saugglocke
- 10: Ansaugbohrung
- 11: Führungsschiene
- 12: Führungsschiene
- 13: Pumpenstößel
- 14: Rolle
- 15: Feder
- 16: Saugblockfuß
- 17: Pfeilrichtung
- 18: Führungsrolle
- 19: Rückschlagventil
- 20: Belüftungsventil
- 21: Abschaltleiste
- 22: Kulisse für Pumpenhub
- 23: Entlüftung
- 24: Hubzylinder
- 25: Pfeilrichtung
- 26: Gleitleiste
- 27: Membran
- 28: Entlüftungsleitung
- 29: Pumpenkammer
- 30: Gehäuse
- 31: Belüftungskanal
- 32: Antriebsriemen für Pumpenstößel 13
- 33: Umlenkrolle
- 34: Antriebsrolle
- 35: Pfeilrichtung
- 36: Verzahnung
- 37: Seitenplatte
- 38: Antriebswelle
- 39: Lager
- 40: Lager
- 41: Antriebswelle
- 42: Antriebsriemen für Pumpenstößel 13
- 43: Verzahnung
- 44: Antriebsritzel
- 45: Antriebswelle
- 46: Exzenternocke
- 47: Pfeilrichtung

## Patentansprüche

1. Vakuumförderer, welcher geeignet ist zum Transport, Ablegen und Stapeln von flächenförmigem Fördergut (7), und welcher einen umlaufenden Fördergurt (2) aufweist und als Bandförderer (1) ausgebildet ist, wobei der Fördergurt (2) in Förderichtung (8) hintereinanderliegende und im gegenseitigen Abstand zueinander angeordnete Saugblöcke (6, 6a, 6b, 6c) aufweist, welche im Wesentlichen eine mit einem Gehäuse (30) verbundene Saugglocke (9) aufweisen, die sich an das Fördergut (7) saugend anlegt, dieses aufnimmt, transportiert und ablegt, wobei am Gehäuse (30) des Saugblockes (6, 6a, 6b, 6c) eine hubgesteuerte Unterdruckpumpe angeordnet ist, **dadurch gekennzeichnet, dass** die als mechanische Stößelpumpe ausgebildete Unterdruckpumpe einen Pumpenstößel (13) aufweist, welcher entweder gegen eine an einer Führungsschiene (12) des Bandförderers (1) angeordneten Kulisse (22) abrollt und eine Hubbewegung ausführt, wobei die Anzahl der Hubbewegungen pro Förderstrecke einer frei wählbaren Amplitudenanzahl der Kulisse (22) zugeordnet ist, oder aber welcher federbelastet gegen einen Antriebsriemen (32, 42) arbeitet, der den Pumpenstößel (13) in Richtung seiner Längsachse mit Hubbewegungen beaufschlagt.

2. Vakuumförderer nach Anspruch 1, **dadurch gekennzeichnet, dass** der Antriebsriemen (32, 42) synchron und gleichlaufend mit dem Fördergurt (2) angetrieben ist.

3. Vakuumförderer nach Anspruch 1, **dadurch gekennzeichnet, dass** der Antriebsriemen (32, 42) unabhängig vom Fördergurt (2) und gegenläufig zum Fördergurt (2) angetrieben ist.

4. Vakuumförderer nach einem der vorhergehenden Ansprüche 1 bis 3, **dadurch gekennzeichnet, dass** der federbelastete Pumpenstößel (13) luftschlüssig über ein Rückschlagventil (19) mit dem Innenraum der Saugglocke (9) unter Zwischenschaltung einer Membran (27) verbunden ist.

5. Vakuumförderer nach einem der vorhergehenden Ansprüche 1 bis 4, **dadurch gekennzeichnet, dass** der Fördergurt (2) über jeweils eine Umlenkrolle (4, 5) läuft, von denen mindestens eine angetrieben ist, wobei dieser an seiner Oberfläche die Saugblöcke (6, 6a, 6b, 6c) aufweist und an seiner Innenseite an einer fest angeordneten Gleitleiste (26) entlanggefördert wird.

6. Vakuumförderer nach einem der vorhergehenden Ansprüche 1 bis 5, **dadurch gekennzeichnet, dass** die Saugglocke (9) zur Aufnahme des Fördergutes (7) angehoben wird, eine Hubstrecke (17) überwindet und nachfolgend auf der Oberfläche des Fördergutes (7) aufsetzt, wobei gleichzeitig ein Vakuum über die aus einem vorzugsweise elastomeren Material bestehende Saugglocke (9), wie zum Beispiel Gummi, Kautschuk, Kunststoff angelegt wird.

7. Vakuumförderer nach einem der vorhergehenden Ansprüche 1 bis 6, **dadurch gekennzeichnet, dass** die Saugglocke (9) etwa in der Mitte ihrer Saugöffnung eine Ansaugbohrung (10) aufweist, hinter der ein Rückschlagventil (19) angeordnet ist, welches luftschlüssig mit einer Pumpenkammer (29) verbunden ist.

8. Vakuumförderer nach Anspruch 7, **dadurch gekennzeichnet, dass** in die Pumpenkammer (29) das hintere Ende des Pumpenstößels (13) hineinragt, in dem sich eine Feder (15) anstützt und deren anderes Ende sich am Grund der Pumpenkammer (29) abstützt.

9. Vakuumförderer nach einem der vorhergehenden Ansprüche 7 oder 8, **dadurch gekennzeichnet, dass** die Pumpenkammer (29) ein weiteres Rückschlagventil (19) aufweist, welches über eine Entlüftung (23) mit der Atmosphäre verbunden ist.

10. Vakuumförderer nach einem der vorhergehenden Ansprüche 8 oder 9, **dadurch gekennzeichnet, dass** die aus dem Saugblock (6) herausragende Seite des Pumpenstößels (13) eine Rolle (14) aufweist, welche aufgrund der Federlast der Feder (15) an die Oberfläche der ortsfesten Kulisse (22) oder des laufenden Antriebsriemens (32) gedrückt wird.

11. Vakuumförderer nach Anspruch 10, **dadurch gekennzeichnet, dass** die Bewegung des Pumpenstößels (13) in seiner Längachse durch das Entlangrollen der Rolle (14) an der entsprechend gekurvten Kulisse (22) im Bereich der Gleitleiste (26) oder des Antriebsriemens (32) ausgebildet ist, wobei das Vakuum durch Ansaugen der Luft über die Ansaugbohrung (10) und Abgeben der verdichteten Luft in der Pumpenkammer (29) über das auslassseitig angeordnete Rückschlagventil (19) über die Entlüftung (23) erzeugt wird.

12. Vakuumförderer nach einem der vorhergehenden Ansprüche 1 bis 11, **dadurch gekennzeichnet, dass** im Bereich der Führungsschiene (12) eine lediglich stückweise vorhandene Abschaltleiste (21) angeordnet ist, welche durch einen Hubzylinder (24) hubgesteuert ist, wobei die Abschaltleiste (21) in Richtung (25) des Saugblockes (6, 6a, 6b, 6c) verfahrbar ist, wodurch ein Belüftungsventil (20) zur Anlage an die Abschaltleiste (21) kommt, entgegen der Kraft einer Feder geöffnet wird und Atmosphärenluft über einen Belüftungskanal (31) in die Saugglocke (9) einführt.

13. Vakuumförderer nach einem der vorhergehenden Ansprüche 8 bis 12, **dadurch gekennzeichnet, dass** der Pumpenstößel (13) entgegen der Kraft der Feder (15) auf eine elastomere verformbare Membran (27) wirkt, welche die Pumpenkammer (29) ausbildet, wobei die Membran (27) hinterlüftet ist und die Rückseite über eine Entlüftungsleitung (28) mit der Atmosphäre verbunden ist und sich der Pumpenstößel (13) durch Abstützung an der Kulisse (22) der Gleitleiste (26) oder durch Abstützung an dem Antriebsriemen (32) hebt und senkt.

14. Vakuumförderer nach einem der vorhergehenden Ansprüche 3 bis 13, **dadurch gekennzeichnet, dass** der unabhängig von dem Fördergurt (22) des Bandförderers (1) angetriebene Antriebsriemen (32) über zwei Umlenkrollen (33, 34) läuft, wobei eine der Umlenkrollen (34) als Antriebsrolle ausgebildet ist und hierbei ein Drehantrieb gegenläufig zu dem Antrieb des Fördergurtes (2) erfolgt.

15. Vakuumförderer nach einem der vorhergehenden Ansprüche 1 bis 14, **dadurch gekennzeichnet, dass** der Antriebsriemen (32) an seiner Außenseite die wellenförmige Kulisse (22) für die Erzeugung des Pumpenhubes des jeweiligen Pumpenstößels (13) aufweist.

## Claims

1. Vacuum conveyor, which is suitable for transporting, depositing and stacking flat products (7) to be conveyed and which has a circulating conveyor belt (2) and is configured as a belt conveyor (1), the conveyor belt (2), in the conveying direction (8), having successive suction blocks (6, 6a, 6b, 6c), which are arranged at a mutual spacing from one another and substantially have a suction cup (9), which is connected to a housing (30) and is applied with suction to the product (7) to be conveyed, picks it up, transports it and deposits it, a stroke-controlled vacuum pump being arranged on the housing (30) of the suction block (6, 6a, 6b, 6c), **characterised in that** the vacuum pump configured as a mechanical ram pump has a pump ram (13), which either rolls against a link (22) arranged on a guide rail (12) of the belt conveyor (1) and carries out a stroke movement, the number of stroke movements per conveyor section being associated with a freely selectable amplitude number of the link (22), or else which operates in a spring-loaded manner against a drive belt (32, 42), which loads the pump ram (13) in the direction of its longitudinal axis with stroke movements.

2. Vacuum conveyor according to claim 1, **characterised in that** the drive belt (32, 42) is driven synchronously with the conveyor belt (2) and in the same direction.

3. Vacuum conveyor according to claim 1, **characterised in that** the drive belt (32, 42) is driven independently of the conveyor belt (2) and in the opposite direction to the conveyor belt (2).

4. Vacuum conveyor according to any one of the preceding claims 1 to 3, **characterised in that** the spring-loaded pump ram (13) has an air connection via a check valve (19) to the interior of the suction cup (9) with the interposition of a diaphragm (27).

5. Vacuum conveyor according to any one of the preceding claims 1 to 4, **characterised in that** the conveyor belt (2) in each case runs over a deflection roller (4, 5), of which at least one is driven, the conveyor belt having the suction blocks (6, 6a, 6b, 6c) on its surface and, on its inside, being conveyed along a rigidly arranged sliding strip (26).

6. Vacuum conveyor according to any one of the preceding claims 1 to 5, **characterised in that** the suction cup (9) is raised to receive the product (7) to be conveyed, negotiates a stroke section (17) and is then deposited on the surface of the product (7) to be conveyed, a vacuum simultaneously being applied by means of the suction cup (9) consisting of a preferably elastomeric material, such as, for example, rubber, caoutchouc, plastics material.

7. Vacuum conveyor according to any one of the preceding claims 1 to 6, **characterised in that** the suction cup (9), approximately in the centre of its suction opening, has a suction bore (10), behind which a check valve (19) is arranged, which has an air connection to a pump chamber (29).

8. Vacuum conveyor according to claim 7, **characterised in that** the rear end of the pump ram (13), in which a spring (15) is supported and the other end of which is supported on the base of the pump chamber (29), projects into the pump chamber (29).

9. Vacuum conveyor according to either of the preceding claims 7 or 8, **characterised in that** the pump chamber (29) has a further check valve (19), which is connected to the atmosphere via an air vent (23).

10. Vacuum conveyor according to either of the preceding claims 8 or 9, **characterised in that** the side of the pump ram (13) projecting out of the suction block (6) has a roller (14), which, because of the spring load of the spring (15), is pressed against the surface of the stationary link (22) or the running drive belt (32).

11. Vacuum conveyor according to claim 10, **characterised in that** the movement of the pump ram (13) in its longitudinal axis is formed by rolling the roller (14) along the correspondingly curved link (22) in the region of the sliding strip (26) or the drive belt (32), the vacuum being produced by sucking the air via the suction bore (10) and discharging the compressed air in the pump chamber (29) via the check valve (19) arranged on the outlet side via the air vent (23).

12. Vacuum conveyor according to any one of the preceding claims 1 to 11, **characterised in that** a switch-off strip (21) only present in pieces is arranged in the region of the guide rail (12) and is stroke-controlled by a stroke cylinder (24), the switch-off strip (21) being moveable in the direction (25) of the suction block (6, 6a, 6b, 6c), whereby a ventilation valve (20) comes to rest on the switch-off strip (21), is opened against the force of a spring and guides atmospheric air via a ventilation channel (31) into the suction cup (9).

13. Vacuum conveyor according to any one of the preceding claims 8 to 12, **characterised in that** the pump ram (13) acts counter to the force of the spring (15) on an elastomeric deformable diaphragm (27), which forms the pump chamber (29), the diaphragm (27) being back-ventilated and the rear being connected via a venting line (28) to the atmosphere and the pump ram (13) rising and lowering by means of support on the link (22) of the sliding strip (26) or by means of support on the drive belt (32).

14. Vacuum conveyor according to any one of the preceding claims 3 to 13, **characterised in that** the drive belt (32) driven independently of the conveyor belt (22) of the belt conveyor (1) runs over two deflection rollers (33, 34), one of the deflection rollers (34) being configured as a drive roller and a rotary drive taking place in the opposite direction to the drive of the conveyor belt (2).

15. Vacuum conveyor according to any one of the preceding claims 1 to 14, **characterised in that** the drive belt (32), on its outside, has the undulating link (22) to produce the pump stroke of the respective pump ram (13).

## Revendications

1. Convoyeur à vide qui est apte à transporter, déposer et empiler des produits plats (7), qui comporte une courroie de convoyeur sans fin (2) et qui est conçu comme un convoyeur à courroie (1), la courroie de convoyeur (2) comportant des blocs d'aspiration (6, 6a, 6b, 6c) disposés les uns derrière les autres dans le sens de transport (8) avec un écartement mutuel et comportant essentiellement une ventouse (9) qui est reliée à un boîtier (30) et qui s'applique par aspiration contre le produit à transporter (7), prend celui-ci, le transporte et le dépose, une pompe à vide à course commandée étant disposée sur le boîtier (30) du bloc d'aspiration (6, 6a, 6b, 6c), **caractérisé en ce que** la pompe à vide, conçue comme une pompe à poussoir mécanique, comporte un poussoir (13) qui soit roule contre une coulisse (22) disposée sur un rail de guidage (12) du convoyeur à courroie (1) et décrit un mouvement de va-et-vient, le nombre de va-et-vient par distance de transport étant associé à une valeur d'amplitude, apte à être choisie librement, de la coulisse, soit agit sous une contrainte élastique contre une courroie d'entraînement (32, 42) qui impose au poussoir de pompe (13) des mouvements de va-et-vient dans le sens de son axe longitudinal.

2. Convoyeur à vide selon la revendication 1, **caractérisé en ce que** la courroie d'entraînement (32, 42) est entraînée de manière synchrone et dans le même sens par rapport à la courroie de convoyeur (2).

3. Convoyeur à vide selon la revendication 1, **caractérisé en ce que** la courroie d'entraînement (32, 42) est entraînée indépendamment de la courroie de convoyeur (2) et en sens inverse par rapport à celle-ci.

4. Convoyeur à vide selon l'une des revendications 1 à 3, **caractérisé en ce que** le poussoir de pompe (13) soumis à une contrainte élastique communique de manière étanche à l'air avec l'intérieur de la ventouse (9) par l'intermédiaire d'un clapet anti-retour (19), une membrane (27) étant prévue entre les deux.

5. Convoyeur à vide selon l'une des revendications 1 à 4 précédentes, **caractérisé en ce que** la courroie de convoyeur (2) passe sur des poulies de renvoi (4, 5), dont au moins une est entraînée, ladite courroie de convoyeur (2) présentant sur sa surface les blocs d'aspiration (6, 6a, 6b, 6c) et étant déplacée, sur son côté intérieur, le long d'une glissière (26) disposée fixe.

6. Convoyeur à vide selon l'une des revendications 1 à 5 précédentes, **caractérisé en ce que** la ventouse (9), pour prendre le produit à transporter (7), est soulevée, parcourt une course (17) et est ensuite posée sur la surface du produit à transporter (7), étant précisé qu'un vide est appliqué en même temps par l'intermédiaire de la ventouse (9) composée d'un matériau de préférence élastomère, comme par exemple de la gomme, du caoutchouc ou une matière plastique.

7. Convoyeur à vide selon l'une des revendications 1 à 6 précédentes, **caractérisé en ce que** la ventouse (9) présente, sensiblement au milieu de son ouverture d'aspiration, un perçage d'aspiration (10) derrière lequel est disposé un clapet anti-retour (19) qui est relié de manière étanche à l'air à une chambre de pompe (29).

8. Convoyeur à vide selon la revendication 7, **caractérisé en ce que** l'extrémité arrière du poussoir de pompe (13), dans lequel s'appuie un ressort (15) et dont l'autre extrémité s'appuie contre le fond de la chambre de pompe (29), pénètre dans ladite chambre de pompe (29).

9. Convoyeur à vide selon l'une des revendications 7 ou 8 précédentes, **caractérisé en ce que** la chambre de pompe (29) comporte un autre clapet anti-retour (19) qui est relié à l'atmosphère par un orifice d'évacuation d'air (23).

10. Convoyeur à vide selon l'une des revendications 8 ou 9 précédentes, **caractérisé en ce que** le côté du poussoir de pompe (13) qui dépasse du bloc d'aspiration (6) comporte un galet (14) qui est pressé du fait de la contrainte élastique du ressort (15) contre la surface de la coulisse fixe (22) ou de la courroie d'entraînement en marche (32).

11. Convoyeur à vide selon la revendication 10, **caractérisé en ce que** le mouvement du poussoir de pompe (13) sur son axe longitudinal est formé grâce au roulement du galet (14) le long de la coulisse (22), pourvue d'une courbe correspondante, dans la zone de la glissière (26) ou de la courroie d'entraînement (32), le vide étant produit par l'aspiration de l'air par le perçage d'aspiration (10) et par l'émission, dans la chambre de pompe (29), de l'air comprimé, par l'intermédiaire du clapet anti-retour (19) disposé côté sortie et grâce à l'orifice d'évacuation d'air (23).

12. Convoyeur à vide selon l'une des revendications 1 à 11 précédentes, **caractérisé en ce qu'**il est prévu dans la zone du rail de guidage (12) un rebord d'arrêt (21), prévu seulement par endroits, dont la course est commandée par un vérin (24), le rebord d'arrêt (21) étant mobile en direction (25) du bloc d'aspiration (6, 6a, 6b, 6c), de sorte qu'une soupape d'aération (20) vient s'appliquer contre ledit rebord d'arrêt (21), s'ouvre à l'encontre de la force d'un ressort et introduit de l'air atmosphérique dans la ventouse (9) par un conduit d'aération (31).

13. Convoyeur à vide selon l'une des revendications 8 à 12 précédentes, **caractérisé en ce que** le poussoir de pompe (13) agit à l'encontre de la force du ressort (15) sur une membrane élastomère (27) déformable élastiquement qui forme la chambre de pompe (29), la membrane (27) étant aérée par l'arrière, le côté arrière étant relié à l'atmosphère par une conduite d'évacuation d'air (28), et le poussoir de pompe (13) se soulevant et s'abaissant grâce à l'appui contre la coulisse (22) de la glissière (26) ou contre la courroie d'entraînement (32).

14. Convoyeur à vide selon l'une des revendications 3 à 13 précédentes, **caractérisé en ce que** la courroie d'entraînement (32) entraînée indépendamment de la courroie (22) du convoyeur à courroie (1) passe sur deux poulies de renvoi (33, 34), l'une des poulies de renvoi (34) étant conçue comme une poulie motrice et un entraînement rotatif ayant lieu en sens inverse par rapport à l'entraînement de la courroie de convoyeur (2).

15. Convoyeur à vide selon l'une des revendications 1 à 14 précédentes, **caractérisé en ce que** la courroie d'entraînement (32) présente, sur son côté extérieur, la coulisse ondulée (22) pour produire la course de pompe du poussoir de pompe (13) correspondant.
